# EUROPEAN PATENT SPECIFICATION

(11) **EP 0 578 321 B1**
(45) Date of publication and mention of the grant of the patent: **07.10.1998**
(21) Application number: 93201964.9
(22) Date of filing: 06.07.1993
(51) Int. Cl.: A01G 17/10

(54) **A supporting device for supporting a branch of a plant**
Stützvorrichtung für Pflanzenzweige
Dispositif de support pour tige d'une plante

(30) Priority: 09.07.1992 NL 9201227
(43) Date of publication of application: 12.01.1994
(73) Proprietor: Delisse, Wilhelmus Jozef, NL-5460 AN Veghel (NL)
(72) Inventor: Delisse, Wilhelmus Jozef, NL-5460 AN Veghel (NL)
(74) Representative: Vollebregt, Cornelis Jacobus, Ir.

(56) References cited:
- DE-C- 875 736
- TUINDERIJ no. 68, 7 April 1988, DOETINCHEM page 41 , XP4569 HENDRIKS 'trosbeugeltje'

## Description

The invention relates to a supporting device for supporting a branch of a plant, in particular a tomato plant, said supporting device being provided with an elongated body according the pre-characterising part of claims 1 and 5.

In the cultivation of tomato plants it has become apparent that under certain growth conditions during the early stage of the cultivation, for example under dark, humid conditions, the branches or so-called truss stems, which eventually bear the tomatoes, become elongated and thin. When in that case the fruits formed by the tomatoes start growing, there is a danger that such a long and thin branch or so-called truss stem will collapse under the influence of the weight of the tomatoes, as a result of which the flow of sap through the truss stem to the fruits is disturbed, so that the fruits or tomatoes will not fully develop. Thus the tomatoes will generally remain smaller than might be expected under optimal conditions, which accordingly results in tomatoes of a lower quality and thus in a lower yield.

In order to overcome this drawback a supporting device has been proposed, which is built up of an elongated bar-shaped curved means, on both ends of which eyes are secured, in whose boundary edges openings are provided for passing the stem therethrough. (See for example the journal "Tuinderij" No. 68, April 1988, page 41.)

The placing of said supporting means is a time-consuming activity, which must take place at an early stage of growth already, since otherwise these supporting devices cannot be provided without any risk of damaging the branch or truss stem. This implies, however, that in many cases this has to be done before it is possible to detect whether or not there is any risk that the truss stem in question will collapse, so that in many cases the supporting devices are provided to no purpose.

From DE-B-875736 a device for bending branches of fruit trees is known, provided with a plate having a gutter-shaped curved edge and two retaining brackets, which are pivotable along said edge. This device is complicated and costly and is likewise difficult to place.

The object of the invention is to obtain a supporting device of the above kind, which can be placed in a very simple manner, also at a later stage of growth.

According to the invention this can be achieved by a supporting device according claims 1 and 5.

By using the construction according to the invention the supporting device can be readily shifted from one side of the respective branch or truss stem without having to deform the branch or truss stem in an undesirable manner thereby.

The invention will be explained in more detail hereafter with reference to a few possible embodiments of the construction according to the invention illustrated in the accompanying Figures.

Figure 1 is an elevational view of a first embodiment of a supporting device according to the invention.

Figure 2 is a plan view of Figure 1.

Figure 3 is a sectional view of Figure 1, seen according to the line III-III in Figure 1.

Figure 4 is a smaller-scale, that is approximately full-scale view of the supporting device shown in Figures 1 - 3, in an intermediate position.

Figure 5 illustrates, to the same scale as in Figure 4, the supporting device in a position supporting a branch.

Figure 6 is an elevational view of a second embodiment of a supporting means according to the invention.

Figure 7 is an elevational view of a third embodiment of a supporting means according to the invention.

Figure 8 is a plan view of Figure 7.

Figure 9 is an elevational view of a fourth embodiment of a supporting means according to the invention.

Figure 10 is a plan view of Figure 9.

Figure 11 is a sectional view of Figure 9, along the line XI-XI of Figure 9.

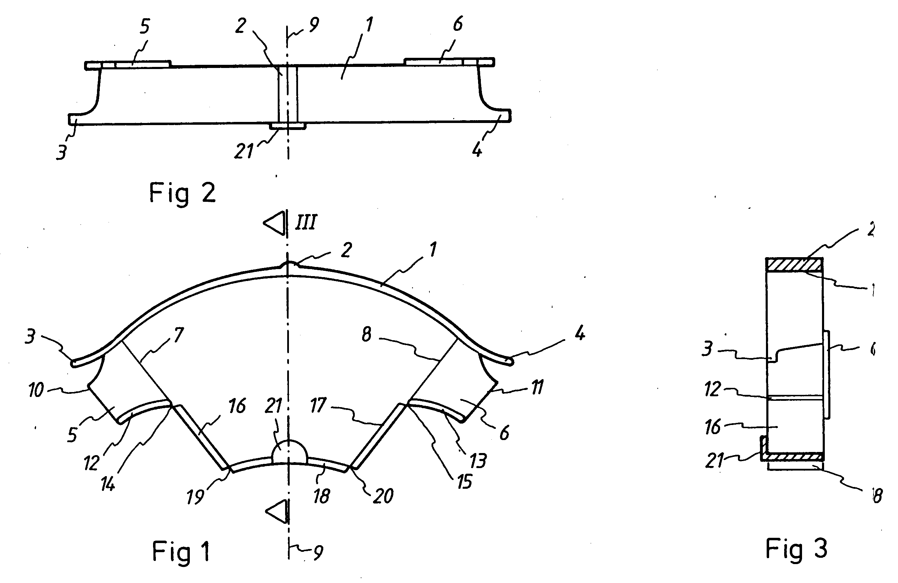

The body of the supporting means shown in Figures 1 - 5 comprises a curved elongaged strip-shaped body 1, which has a thickening 2 near its centre and which tapers off to two narrow point-shaped parts 3 and 4 near its ends, said parts 3 and 4 being curved in the opposite direction to the curvature of the body 1.

The upper ends of two connecting parts or wall parts 5 and 6, seen in Figure 1, which extend at least substantially perpendicularly to the body 1, are connected to the body near the ends of the body 1, at the point where said body 1 blends into the narrowing ends 3 and 4. The extensions of the facing boundary edges 7 and 8 of the wall parts 5 and 6 intersect on the axis of symmetry 9 of the supporting device, on which axis of symmetry 9 also the centre of curvature of the curved strip-shaped body 1 is located.

At their ends facing away from each other the wall parts 5 and 6 are bounded by boundary edges 10 and 11 respectively extending parallel to the respective boundary edges 7 and 8, the extensions of said boundary edges 10 and 11 at least substantially intersecting the free ends of the parts 3 and 4, seen in Figure 1.

Wall parts 12 and 13 extending perpendicularly to the wall parts 5 and 6 join the boundary edges of the wall parts 5 and 6 facing away from the strip-shaped body 1, the curvature of said wall parts 12 and 13 being more or less similar to that of the body 1.

At least substantially rectangular further wall parts 16 and 17 join the ends of the wall parts 12 and 14, via so-called film hinges 14 and 15, near the ends of the boundary edges 7 and 8 facing away from the body 1, in such a manner that said wall parts 16 and 17 can be pivoted with respect to the wall parts 12 and 13 about the pivots formed by the film hinges 14 and 15 extending perpendicularly to the plane of the drawing, seen in Figure 1.

In the position shown in Figure 1 the wall parts 16 and 17 extend from the hinges 14 and 15 respectively in a direction away from the body 1 and towards each other.

The ends of the wall parts 16 and 17 remote from the pivots 14 and 15 are interconnected by means of a wall part 18, which joins the wall parts 16 and 17 by means of film hinges 19 and 20 corresponding with the film hinges 14 and 15. The curved wall part 18 extends more or less parallel to the body 1, as will be apparent from Figure 1.

Near the centre of the wall part 18 an upwardly extending lip 21 is provided on one side of the wall part 18.

The above-described supporting means is preferably a one-piece unit and is for example manufactured of plastic material by injection moulding.

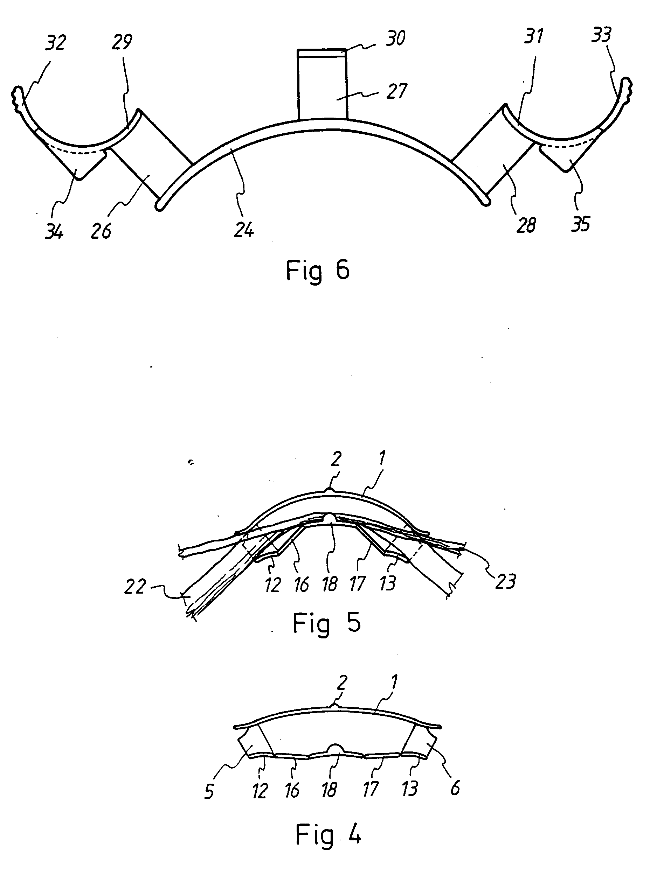

As will furthermore be apparent from Figures 4 and 5, the wall part 18 can be pressed in the direction of the body 1, whereby the wall parts 16-18 pass a position in which they are more or less in line, and whereby also the body 1 takes up a flatter position than in the unloaded position shown in Figure 1. When the wall part 18 is pressed further in the direction of the body 1, the wall parts 16-18 will pass a so-called dead centre and reach the position shown in Figure 5 thereby.

Before or while the wall part 18 is moved in the direction of the body 1 in the above-described manner the supporting means described can be slid onto a branch to be supported from one side of the branch in question, perpendicularly to the longitudinal direction of said branch, so that in the eventually closed position the supporting means will be secured to the branch, whereby, dependent on whether a thicker branch 22 or a thinner branch 23 is concerned, said branch extends through the supporting means in the manner shown in Figure 5. It will be apparent that the branch 22 or 23 is thereby confined between the lip 21 located on one side of said branch and the wall parts 10 and 11 located on the other side of said branch.

Thus, by using the above-described construction according to the invention, a supporting device has been obtained which can be placed in a simple manner, by means of which supporting device an effective support of a branch of a plant can be effected.

The body of the supporting device shown in Figure 6 comprises an elongated strip-shaped curved body 24. Three wall parts 26, 27 and 28, which extend perpendicularly to the body, are provided on the side of the body remote from the centre of curvature of said body, near the ends and near the centre. Wall parts 29, 30 and 31 respectively, extending at least substantially parallel to the body 24 join the ends of said wall parts 26, 27 and 28 remote from the body 24. The wall parts 29 and 31 located near the ends of the supporting device are provided with extensions 32 and 33 respectively, which extend in a direction away from each other. Lip parts 34 and 35, which extend parallel to the wall parts 26 and 28, are provided on said extensions, at the sides of the wall parts 29 and 31 remote from the wall parts 26 and 28, said lip parts 34 and 35 projecting from below the wall parts 29 and 31 respectively or the extensions 32 and 33 thereof at the same side as the wall parts 26 and 28.

The free ends of the extensions 32 and 33 are furthermore knurled at their sides facing away from each other, which knurlings make it easier to grip said extensions 32 and 33 with the ends of for example the thumb and finger of a hand.

It will be apparent that also this supporting device shown in Figure 6 can be shifted onto a branch from one side of said branch in a simple manner, perpendicularly to the longitudinal direction of the branch in question, whereby said branch will abut against the wall parts 26-28 and is confined between the body 24 and the wall parts 29-31 respectively, as well as between the wall parts 26 and 28 and the lips 34 and 35.

In order to make it easier to provide said supporting device, the device may be bent into a straighter position, if desired, by moving the knurled ends of the extensions 32 and 33 towards each other.

It will be apparent, that also this one-piece supporting device, which is made of a suitable, slightly resilient plastic material, can be manufactured and placed on a branch in a simple and efficient manner, thereby effecting an effective support of the branch in question.

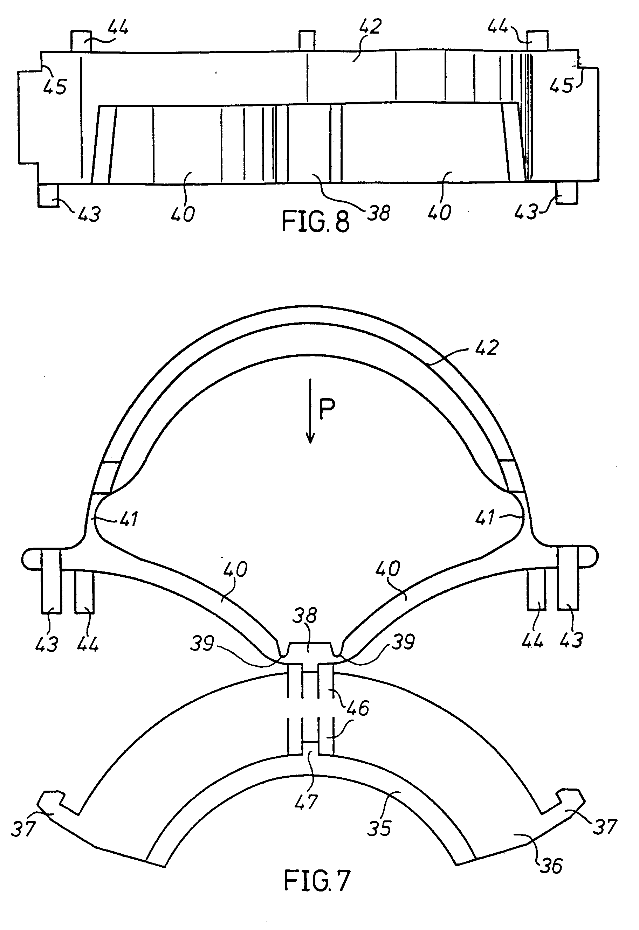

The device shown in Figures 7 and 8 comprises a strip-shaped curved body 35, which extends perpendicularly to the plane of drawing of Figure 7. A wall 36 extending perpendicularly to the strip-shaped body 35 joins a longitudinal edge of said strip-shaped body 35.

Hooks 37 are provided near the ends of said wall part.

Near the centre of the wall part 36 a connecting rib 38 extending perpendicularly to the wall part 36 and parallel to the body 35 is connected to the boundary edge remote from the body 35. Arms 40 are pivotally connected, by means of film hinges 39, to the boundary edges of the connecting rib 38 extending perpendicularly to the wall part 36.

As is apparent from Figure 8 the width of the arms 40 is equal to the width of the body 35.

The ends of a connecting arch 42, whose width is smaller than that of the arms 40, as is apparent from the top view of Figure 8, are coupled to the arms 40, by means of film hinges 41, at a short distance from the free ends of the arms 40

Two strip-shaped projections 43 and 44 respectively extending in the direction of the body 35 are secured on either side of the free ends of the arms 40, said projections being slightly staggered relative to each other, seen in the longitudinal direction of the arm 40 in question, as will be apparent from Figure 7.

Furthermore recesses 45 are provided in the free ends of the arms 40, at the side directed towards the wall 36.

As is furthermore apparent from Figure 7, the connection between the connecting rib 38 and the wall 36 and the connection between the wall 36 and the body 35 respectively may be reinforced by connecting ribs 46.

Furthermore one or more projecting cams 47 may be provided on the boundary edge of the elongated body 35 remote from the wall 36.

It will be apparent that in the open position of the supporting device shown in Figures 7 and 8 a branch to be supported can be placed on the elongated body 35 from an open side of the device without any difficulty. The branch will thereby come to lie on the elongated body 35 and between the side wall 36 joining said elongated body 35 and the cams 47 that may be provided.

Then a pressure force can be exerted on the connecting part 42, in the direction according to the arrow P. The arms 40 will pivot about the pivots 39 thereby, to a position in which the arms 40 extend at least substantially parallel to the curved body 35. The projecting arms 44 abut against the side of the wall part 36 remote from the body 35 thereby. The arms 43 extend in front of the branch lying on the body 35, so that said branch will be further retained between the wall part 36 and the arms 43. When the supporting device closes the hooks 37 will move through the recesses 45 and spring out slightly, and subsequently hook behind the ends of the arms 40, thus ensuring adequate locking of the arms 40.

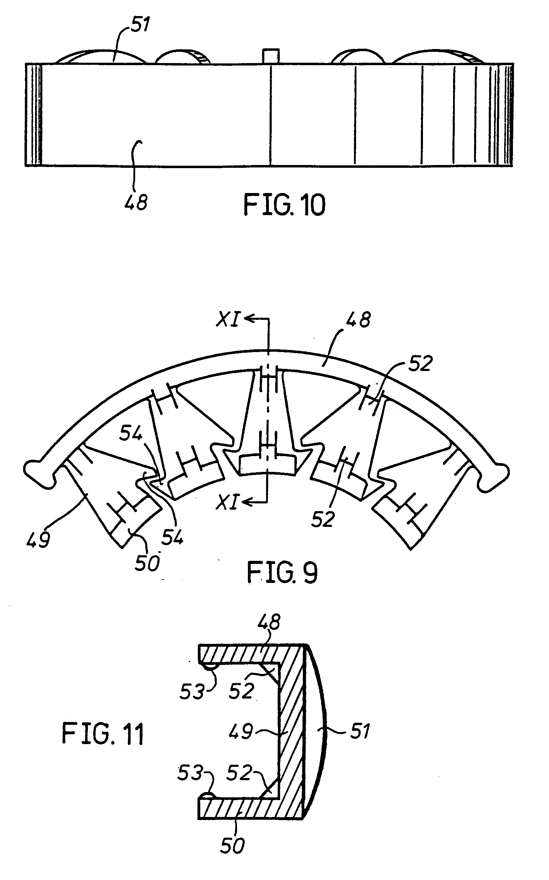

The supporting device shown in Figures 9 - 11 comprises an elongated strip-shaped body 48, which is joined by regularly spaced, substantially triangular wall parts 49, which gradually widen in a direction away from the elongated strip-shaped body 48. Ribs 50 extending perpendicularly to said wall parts 49 and parallel to the body 48 join the ends of said wall parts 49.

The wall parts 49 may be reinforced at their sides remote from the ribs 50 by means of ribs 51 extending perpendicularly to the wall parts 49. The connection between the wall part 49 and the body 48 and the ribs 50 respectively may be reinforced by means of small ribs 52.

Protecting cams 53 may be provided on the facing sides of the boundary edge of the body 52 remote from the wall parts 49, as well as on the free ends of the ribs 50.

As is apparent from Figure 9 the facing sides of the wall parts 49 are furthermore provided with projecting hooks 54.

This resilient supporting device of plastic material, which may also be in a single piece, can be straightened, if desired, in order for a branch to be placed, whereby the device can be slid onto the branch in question from the open side, whereby the branch will be retained between the body 48, the ribs 50 extending parallel thereto, the wall parts 49 and the cams 53. When under the influence of a load applied the supporting device is bent any further from the unloaded position shown in Figure 9, the hook-shaped parts will engage each other more firmly and prevent undesirable distortion of the supporting device.

Although hereinabove mention is made in particular of the use of the supporting device with tomato plants, it will be apparent that the supporting device according to the invention can also be used with other plants.

## Claims

1. A supporting device for supporting a branch (22, 23) of a plant, in particular a tomato plant, said supporting device being provided with an elongated body (1, 35, 48), whereby said elongated body, when seen in a direction transverse to its longitudinal direction, is bent about a centre of curvature and defines one side of a space for accommodating a branch, characterized in that in its position of use said space is defined by wall parts (12, 16, 18, 17, 13; 42; 50) of said body situated at a distance from said centre of curvature different from the distance between said centre of curvature and said elongated body (1, 35, 48), whereby said elongated body (1, 35, 48) and said wall parts (12, 16, 18, 17, 13; 42; 50) at only one side of the device are interconnected by further connection parts (5, 6, 38-40; 49) extending between said elongated body (1, 35, 48) and at least some of said wall parts (12, 16, 18, 17, 13; 42; 50), in such a way that said elongated body (1, 35, 48) and said wall parts (12, 16, 18, 17, 13; 42; 50) extend substantially in the same direction from said connecting parts (5, 6, 38-40, 49) and form in the position of use two opposed walls defining said space and extending substantially over the whole length of said space.

2. A supporting device according to claim 1, characterized in that the connection parts (5, 6) have been provided near the ends of the elongated body (1), whilst at the ends of said connecting parts (5, 6) remote from the elongated body (1) the ends of further wall parts (16, 17) are coupled to said connecting parts (5, 6) by means of pivots (19, 20), and the ends of said wall parts remote from the connecting parts (5, 6) are hingedly interconnected by at least one further wall part (18).

3. A supporting device according to claim 2, characterized in that at least one of said further parts (18) is at at least one side provided with a protruding part (21) extending in the direction of said elongated body (1).

4. A supporting device according to claim 3, characterized in that, seen in the longitudinal direction of the supporting device, a protruding part (21) is located on one side of the further parts (16, 18) and a connecting part (5, 6) is located on the other side of said further parts.

5. A supporting device for supporting a branch (22, 23) of a plant, in particular a tomato plant, said supporting device being provided with an elongated body (24), whereby said elongated body, when seen in a direction transverse to its longitudinal direction, is bent about a centre of curvature and defines one side of a space for accommodating a branch, said elongated body (24) is provided with projecting parts (26-28), which extend from the elongated body (24) in a direction remote from said centre of curvature of the body (24), characterized in that wall parts (29-31) extending approximately parallel to the elongate body (24) are connected to the remote ends of said projecting parts (26-28) being at one longitudinal side of the body (24), and that the wall parts (29, 31) located near the ends of the elongated body (24) are provided with extensions (32, 33) extending in a direction away from each other, said extensions being curved in a direction away from said elongated body (24) (figure 6).

6. A supporting device according to claim 5, characterized in that lips (34, 35) extending in the direction of said elongated body (24) are connected to the wall parts (29, 31), or the extensions thereof (32, 33), which are located near the ends of the elongated body (24), and extend at least substantially parallel to said projecting parts (26, 28), at the sides of the wall parts (29, 31) facing away from the projecting parts (26, 28).

7. A supporting device according to claim 1, characterized in that a longitudinal edge of the elongated strip-shaped curved body (35) is joined by at least one wall part (36), by means of which a connecting rib (38) extending at some distance above the elongated body (35) is connected to said elongated body, whilst the ends of two arms (40) are pivotally connected to the connecting rib, in such a manner that said arms are pivotable between a position in which the arms extend at least substantially parallel to the elongated body (35) and a position in which said arms (40) extend from the connecting rib (38) in a direction away from the elongated body (35).

8. A supporting device according to claim 7, characterized in that both arms (40) are pivotally connected to a connecting piece (42) near their ends (41) remote from the connecting rib (38).

9. A supporting device according to claim 7 or 8, characterized in that ears (43, 44) extending in the direction of the elongated body (35) are provided near the ends of said arms (40) remote from the connecting rib (38).

10. A supporting device according to claim 9, characterized in that hooks (37) are provided on the ends of the wall (36) joining said elongated body (35), said hooks engaging behind the ends of the arms (40) in the closed position of use of the supporting device.

11. A supporting device according to any one of the preceding claims, characterized in that on the elongated strip-shaped body (48) there are secured regularly spaced connecting parts (49), which support at their ends remote from the elongated body (48) ribs (50), which extend parallel to the elongated body (48).

12. A supporting device according to claim 11, characterized in that the facing sides of the connecting parts (49) are provided with hook-shaped parts (54) engaging each other.

13. A supporting device according to claim 11 or 12, characterized in that protruding cams (53) are provided on the facing sides of the elongated body (48) and of the ribs (50), near the free boundary edges of said elongated body (48) and the ribs (50) respectively.

## Patentansprüche

1. Stützvorrichtung für einen Pflanzenzweig (22,23), insbesondere den Zweig einer Tomatenpflanze, ausgestattet mit einem langgestreckten Körper (1,35,38), der - quer zu seiner Längsrichtung betrachtet - um einen Krümmungsmittelpunkt gebogen ist und eine Seite eines zur Aufnahme eines Zweiges dienenden Raumes bildet, **dadurch gekennzeichnet**, **daß** dieser Raum in seiner Verwendungsstellung durch Wandteile (12,16,18,17, 13;42;50) dieses Körpers definiert wird, deren Abstand zu dem Krümmungsmittelpunkt sich von dem Abstand zwischen diesem Krümmungsmittelpunkt und dem langgestreckten Körper (1,35,48) unterscheidet, wobei der langgestreckte Körper (1,35,48) und die Wandteile (12,16,18,17,13;42;50) lediglich auf einer Seite der Vorrichtung durch weitere Verbinungsteile (5,6,38-40;49), die sich zwischen dem langgestreckten Körper (1,35,48) und zumindest einigen der Wandteile (12,16,18,17,13;42,50) erstrecken, verbunden sind, und zwar dergestalt, daß der langgestreckte Körper (1,35,48) und die Wandteile (12,16,18,17,13;42;50) ausgehend von den Verbindungsteilen (5,6,38-40,49) im wesentlichen in derselben Richtung verlaufen und in der Verwendungsstellung zwei gegenüberliegende Wandungen bilden, die den vorgenannten Raum definieren und sich im wesentlichen über dessen gesamte Länge erstrecken.

2. Stützvorrichtung gemaß Anspruch 1, **dadurch gekennzeichnet, daß** die Verbindungsteile (5,6) nahe den Enden des langgestreckten Körpers (1) vorgesehen sind, wogegen an den von dem langgestreckten Körper (1) entfernten Enden dieser Verbindungsteile (5,6) die Enden weiterer Wandteile (16,17) über Klappgelenke (19,20) an den Verbindungsteilen (5,6) angelenkt sind, und die von den Verbindungsteilen (5,6) entfernten Enden der Wandteile durch zumindest ein weiteres Wandteil (18) scharnierartig miteinander verbunden sind.

3. Stützvorrichtung gemäß Anspruch 2, **dadurch gekennzeichnet, daß** mindestens eines der weiteren Teile (18) mindestens einseitig ein vorstehendes Teil (21) aufweist, das sich in Richtung des langgestreckten Körpers (1) erstreckt.

4. Stützvorrichtung gemäß Anspruch 3, **dadurch gekennzeichnet**, **daß** - in Längsrichtung der Stützvorrichtung gesehen - auf einer Seite der weiteren Teile (16,18) ein vorstehendes Teil (21) und auf der anderen Seite der weiteren Teile ein Verbindungsteil (5,6) angeordnet ist.

5. Stützvorrichtung für einen Pflanzenzweig (22,23), insbesondere den Zweig einer Tomatenpflanze, ausgestattet mit einem langgestreckten Körper (24), der - quer zu seiner Längsrichtung betrachtet - um einen Krümmungsmittelpunkt gebogen ist und eine Seite eines zur Aufnahme eines Zweiges dienenden Raumes bildet, wobei dieser langgestreckte Körper (24) mehrere vorstehende Teile (26-28) aufweist, die sich ausgehend von dem langgestreckten Körper (24) in eine von den Krümmungsmittelpunkt des Körpers (24) wegweisende Richtung erstrecken, **dadurch gekennzeichnet, daß** an den von dem Körper (24) entfernten Enden der vorstehenden Teile (26-28), die an einer Längsseite des Körpers (24) vorgesehen sind, Wandteile (29-31) sitzen, die ungefähr parallel zu dem langgestreckten Körper (24) verlaufen, und diese Wandteile (29,31) nahe den Enden des langgestreckten Körpers (24) über Fortsätze (32,33) verfügen, die in entgegengesetzte Richtungen weisen, wobei diese Fortsätze so gekrümmt sind, daß sie von dem langgestreckten Körper (24) wegweisen (Abb. 6).

6. Stützvorrichtung gemäß Anspruch 5, **dadurch gekennzeichnet**, **daß** an den Wandteilen (29,31) oder deren Fortsätzen (32,33) - nahe den Enden des langgestreckten Körpers - jeweils Lippen (34,35) angesetzt sind, die in Richtung des langgestreckten Körpers (24) verlaufen und sich zumindest im wesentlichen parallel zu den vorstehenden Teilen (26,28) erstrecken, und zwar an denjenigen Seiten der Wandteile (29,31), die von den vorstehenden Teilen (26,38) wegweisen.

7. Stützvorrichtung gemäß Anspruch 1, **dadurch gekennzeichnet**, **daß** eine Längskante des langgestreckten streifenförmigen gekrümmten Körpers (35) mit mindestens einem Wandteil (36) verbunden ist, mittels dessen eine in einiger Entfernung über dem langgestreckten Körper (35) verlaufende Verbindungsrippe (38) mit dem langgestreckten Körper verbunden ist, wobei an dieser Verbindungsrippe die Enden von zwei Armen (40) klappbar so angelenkt sind, daß sie sich zwischen einer Stellung, in der die Arme zumindest im wesentlichen parallel zu dem langgestreckten Körper (35) verlaufen, und einer Stellung, in der sich die Arme (40) ausgehend von der Verbindungsrippe (38) in einer von dem langgestreckten Körper (35) wegweisenden Richtung erstrecken, schwenken lassen.

8. Stützvorrichtung gemäß Anspruch 7, **dadurch gekennzeichnet**, **daß** beide Arme (40) nahe ihren von der Verbindungsrippe (38) entfernten Enden (41) klappbar an einem Verbindungsteil (42) angelenkt sind.

9. Stützvorrichtung gemäß Anspruch 7 oder 8, **dadurch gekennzeichnet**, **daß** nahe den von der Verbindungsrippe (38) entfernten Enden der Arme (40) Laschen (43,44) angeordnet sind, die sich in derselben Richtung erstrecken wie der langgestreckte Körper (35).

10. Stützvorrichtung gemäß Anspruch 9, **dadurch gekennzeichnet**, **daß** an den Enden der Wand (36), die mit dem langgestreckten Körper (35) verbunden sind, Haken (37) vorgesehen sind, die in der geschlossenen Stellung der Stützvorrichtung hinter den Enden der Arme (40) eingreifen.

11. Stützvorrichtung gemäß einem der vorstehenden Ansprüche, **dadurch gekennzeichnet**, **daß** an dem langgestreckten streifenförmigen Körper (48) in regelmäßigen Abständen Verbindungsteile (49) befestigt sind, die an ihren von dem langgestreckten Körper (48) entfernten Enden die parallel zu dem langgestreckten Körper (48) verlaufenden Rippen (50) tragen.

12. Stützvorrichtung gemäß Anspruch 11, dadurch gekennzeichnet, daß die einander zugewandten Seiten der Verbindungsteile (49) mit hakenförmigen Teilen (54) ausgestattet sind, die miteinander in Eingriff gehen.

13. Stützvorrichtung gemäß Anspruch 11 oder 12, dadurch gekennzeichnet, daß die einander zugewandten Seiten des langgestreckten Körpers (48) und der Rippen (50) nahe den freien Endkanten des langgestreckten Körpers (48) und der Rippen (50) mehrere vorstehende Nocken (53) tragen.

## Revendications

1. Dispositif de support pour supporter une branche (22,23) d'une plante, en particulier un pied de tomate, ledit dispositif de support comprenant un corps allongé (1,35,48) de sorte que ledit corps allongé, lorsqu'il est vu dans une direction transvérsale à sa direction longitudinale, est courbé autour d'un centre de courbure et définit un côté d'un espace de réception d'une branche, caractérisé en ce que, dans sa position d'utilisation, le dit espace est défini par des éléments de paroi (12,16,18, 17,13;42;50) dudit corps situés à une distance dudit centre de courbure qui est différente de la distance entre ledit centre de courbure et ledit corps allongé (1,35,48), et ledit corps allongé (1,35,48) et lesdits éléments de paroi (12,16,18,17,13;42;50) sur un seul côté du dispositif sont interconnectés par d'autres éléments de connexion (5,6, 38-40;49) s'étendant entre ledit corps allongé (1,35,48) et au moins certains desdits éléments de paroi (12,16,18, 17,13;42;50), d'une manière telle que ledit corps allongé (1,35,48) et lesdits éléments de paroi (12,16,18,17,13; 42;50) s'étendent sensiblement dans la même direction à partir desdits éléments de connexion (5,6,38-40,49) et forment, dans la position d'utilisation, deux parois opposées définissant ledit espace et s'étendant sensiblement sur toute la longueur dudit espace.

2. Dispositif de support suivant la revendication 1, caractérisé en ce que les éléments de connexion (5,6) sont prévus près des extrémités du corps allongé (1) tandis que, aux extrémités desdits éléments de connexion (5,6) éloignées du corps allongé (1), les extrémités d'autres éléments de paroi (16,17) sont reliées auxdits éléments de connexion (5,6) au moyen de pivots (19,20), et les extrémités desdits éléments de paroi éloignées des éléments de connexion (5,6) sont interconnectées de façon articulée par au moins un autre élément de paroi (18).

3. Dispositif de support suivant la revendication 2, caractérisé en ce qu'au moins un desdits autres éléments (18) comporte, sur au moins un côté, une partie saillante (21) s'étendant dans la direction du dit corps allongé (1).

4. Dispositif de support suivant la revendication 3, caractérisé en ce que, lorsqu'on regarde dans la direction longitudinale du dispositif de support, une partie en saillie (21) est située sur un côté des autres éléments (16,18) et un élément de connexion (5,6) est situé sur l'autre côté desdits autres éléments.

5. Dispositif de support pour supporter une branche (22,23) d'une plante, en particulier un pied de tomate, ledit dispositif de support comprenant un corps allongé (24) tel que ledit corps allongé, vu dans une direction transversale à sa direction longitudinale, est courbé autour d'un centre de courbure et définit un côté d'un espace de réception d'une branche, ledit corps allongé (24) comporte des parties en saillie (26-28) qui s'étendent à partir du corps allongé (24) dans une direction à l'opposé dudit centre de courbure du corps (24), caractérisé en ce que des éléments de paroi (29-31) s'étendant sensiblement parallèlement au corps allongé (24) sont connectés aux extrémités distantes desdits éléments en saillie (26 - 28) situées sur un côté longitudinal du corps (24), et en ce que les éléments de paroi (29,31) situés près des extrémités du corps allongé (24) comportent des prolongements (32,33) s'étendant dans une direction à l'opposé l'un de l'autre, lesdits prolongements étant courbés dans une direction à l'opposé dudit corps allongé (24) (figure 6).

6. Dispositif de support suivant la revendication 5, caractérisé en ce que des lèvres (34,35) s'étendant dans la direction dudit corps allongé (24) sont connectées aux éléments de paroi (29,31), ou à leurs prolongements (32,33), qui sont situés près des extrémités du corps allongé (24) et elles s'étendent au moins sensiblement parallèlement auxdites parties en saillie (26, 28), sur les côtés des éléments de paroi (29,31) tournés à l'opposé des éléments en saillie (26,28).

7. Dispositif de support suivant la revendication 1, caractérisé en ce qu'un bord longitudinal du corps courbe allongé en forme de bande (35) est relié à au moins un élément de paroi (36), au moyen duquel une nervure de connexion (38) s'étendant à une certaine distance au-dessus du corps allongé (35) est connectée audit corps allongé, tandis que les extrémités de deux bras (40) sont connectées de façon pivotante à la nervure de connexion, d'une manière telle que lesdits bras peuvent pivoter entre une position dans laquelle les bras s'étendent au moins sensiblement parallèlement au corps allongé (35) et une position dans laquelle lesdits bras (40) s'étendent à partir de la nervure de connexion (38) dans une direction à l'opposé du corps allongé (35).

8. Dispositif de support suivant la revendication 7, caractérisé en ce que les deux bras (40) sont connectés de façon pivotante à une pièce de connexion (42), près de leurs extrémités (41) éloignées de la nervure de connexion (38).

9. Dispositif de support suivant la revendication 7 ou 8, caractérisé en ce que des oreilles (43,44) s'étendant dans la direction du corps allongé (35) sont prévues près des extrémités desdits bras (40) éloignées de la nervure de connexion (38).

10. Dispositif de support suivant la revendication 9, caractérisé en ce que des crochets (37) sont prévus sur les extrémités de la paroi (36) reliée audit corps allongé (35), lesdits crochets s'engageant derrière les extrémités des bras (40) dans la position fermée d'utilisation du dispositif de support.

11. Dispositif de support suivant une quelconque des revendications précédentes, caractérisé en ce que, sur le corps allongé en forme de bande (48), des éléments de connexion régulièrement espacés (49) sont fixés et ils supportent, à leurs extrémités éloignées du corps allongé (48), des nervures (50) qui s'étendent parallèlement au corps allongé (48).

12. Dispositif de support suivant la revendication 11, caractérisé en ce que les côtés en regard des éléments de connexion (49) comportent des parties en forme de crochet (54) en prise mutuelle.

13. Dispositif de support suivant la revendication 11 ou 12, caractérisé en ce que des cames en saillie (53) sont prévues sur les côtés en regard du corps allongé (48) et des nervures (50), près des bords libres de délimination dudit corps allongé (48) et des nervures (50) respectivement.
